# EUROPEAN PATENT SPECIFICATION

(11) **EP 2 599 152 B1**
(45) Date of publication and mention of the grant of the patent: **02.08.2017**
(21) Application number: 11738657.3
(22) Date of filing: 06.07.2011
(51) Int. Cl.: H01M 8/0662, H01M 8/04014, H01M 8/04089, H01M 8/04111, H01M 8/124

(54) **A SOLID OXIDE FUEL CELL SYSTEM**
FESTOXID-BRENNSTOFFZELLENSYSTEM
SYSTÈME DE PILES À COMBUSTIBLE À OXYDE SOLIDE

(30) Priority: 30.07.2010 GB 201012775
(43) Date of publication of application: 05.06.2013
(73) Proprietor: LG Fuel Cell Systems, Inc., North Canton OH 44720 (US)
(72) Inventor: SAUNDERS, Gary, Derby DE24 8BJ (GB); BOZZOLO, Michele, Derby DE24 8BJ (GB); BUTLER, Philip, Derby DE24 8BJ (GB); AGNEW, Gerard, Derby DE24 8BJ (GB)
(74) Representative: HGF Limited
(86) International application number: PCT/EP2011/061386
(87) International publication number: WO 2012/013460

(56) References cited:
- EP-A2- 1 523 056
- EP-A2- 1 564 830
- WO-A1-03/021702
- US-A1- 2004 062 973

## Description

The present invention relates to a high temperature fuel cell system, in particular to a solid oxide fuel cell system.

A problem with a known solid oxide fuel cell system is that the combustor exhaust gases have been supplied with fresh oxidant to the cathodes of the solid oxide fuel cells in order to produce a sufficient temperature rise so that the solid oxide fuel cells are at the required operating temperature. However, it has now been found that some of the combustion products, e.g. steam, present in the combustor exhaust gases supplied to the cathodes of the solid oxide fuel cells is detrimental to the performance and durability of the solid oxide fuel cells. Document EP1523056 discloses a solid oxide fuel cell system, in which a combustor is used to heat up the oxidant supplied to the fuel cell stack. Accordingly the present invention seeks to provide a novel solid oxide fuel cell system which reduces, preferably, overcomes the above mentioned problem.

Accordingly the present invention provides a solid oxide fuel cell system according to the present claims and comprising a solid oxide fuel cell stack, a compressor and a turbine, the solid oxide fuel cell stack comprising at least one solid oxide fuel cell, each solid oxide fuel cell comprising an electrolyte, an anode and a cathode, the compressor being arranged to supply at least a portion of the oxidant to the cathode of the at least one solid oxide fuel cell, a fuel supply being arranged to supply fuel to the anode of the at least one solid oxide fuel cell, the solid oxide fuel cell stack being arranged to supply a portion of the unused oxidant from the cathode of the at least one solid oxide fuel cell back to the cathode of the at least one solid oxide fuel cell, the solid oxide fuel cell stack being arranged to supply a portion of the unused fuel from the anode of the at least one solid oxide fuel cell to a combustor, an oxidant supply arranged to supply oxidant to the combustor, the combustor being arranged to supply the combustor exhaust gases to a first inlet of a heat exchanger, the heat exchanger being arranged to supply at least a portion of the combustor exhaust gases from a first outlet of the heat exchanger to the turbine, the at least a portion of the oxidant from the compressor and the unused oxidant from the cathode of the at least one solid oxide fuel cell being arranged to be supplied to a second inlet of the heat exchanger to preheat the oxidant supplied to the cathode of the at least one solid oxide fuel cell, the heat exchanger being arranged to supply the at least a portion of the oxidant from the compressor and the unused oxidant from the cathode of the at least one solid oxide fuel cell from a second outlet of the heat exchanger to the cathode of the at least one solid oxide fuel cell.

The oxidant supply to supply oxidant to the combustor comprises a supply of a portion of the unused oxidant from the cathode of the at least one solid oxide fuel cell to the combustor.

The compressor is arranged to supply a portion of the oxidant to the combustor and the heat exchanger is arranged to supply a portion of the combustor exhaust gases from the first outlet of the heat exchanger to the combustor.

The compressor may be arranged to supply a portion of the oxidant to the first inlet of the heat exchanger such that the portion of oxidant flows with the combustor exhaust gases into the first inlet of the heat exchanger and the heat exchanger is arranged to supply a portion of the combustor exhaust gases and a sub portion of the portion of oxidant from the first outlet of the heat exchanger to the heat exchanger.

A first duct may connect the first outlet of the heat exchanger to the combustor and a second duct may connect the combustor to the first inlet of the heat exchanger. The compressor may be arranged to supply a portion of the oxidant to the first duct such that the portion of oxidant is supplied to the combustor and the solid oxide fuel cell stack is arranged to supply a portion of the unused oxidant from the cathode of the at least one solid oxide fuel cell to the combustor. The compressor may be arranged to supply a portion of the oxidant to the first duct such that the portion of oxidant is supplied to the combustor and the solid oxide fuel cell stack is arranged to supply a portion of the unused oxidant from the cathode of the at least one solid oxide fuel cell to the second duct. The compressor may be arranged to supply a portion of the oxidant to the second duct and the solid oxide fuel cell stack is arranged to supply a portion of the unused oxidant from the cathode of the at least one solid oxide fuel cell to the second duct. The compressor may be arranged to supply a portion of the oxidant to the second duct and the solid oxide fuel cell stack is arranged to supply a portion of the unused oxidant from the cathode of the at least one solid oxide fuel cell to the combustor.

A first duct may connect the first outlet of the heat exchanger to the first inlet of the heat exchanger. The compressor may be arranged to supply a portion of the oxidant to the first duct such that the portion of oxidant is supplied to the heat exchanger and the solid oxide fuel cell stack is arranged to supply a portion of the unused oxidant from the cathode of the at least one solid oxide fuel cell to the combustor and the combustor is arranged to supply the combustor exhaust gases to the first duct.

The compressor may be arranged to supply a portion of the oxidant to the combustor, the solid oxide fuel cell stack is arranged to supply a portion of the unused oxidant from the cathode of the at least one solid oxide fuel cell to the first inlet of the heat exchanger and the heat exchanger is arranged to supply a portion of the combustor exhaust gases and a sub portion of the portion of unused oxidant from the first outlet of the heat exchanger to the combustor.

The compressor may be arranged to supply a portion of the oxidant to the first inlet of the heat exchanger with the combustor exhaust gases, the solid oxide fuel cell stack is arranged to supply a portion of the unused oxidant from the cathode of the at least one solid oxide fuel cell with the combustor exhaust gases and the portion of the oxidant from the compressor to the first inlet of the heat exchanger and the heat exchanger is arranged to supply a portion of the combustor exhaust gases, a sub portion of the portion of unused oxidant from cathode of the at least one solid oxide fuel cell and a sub portion of the portion of oxidant from the compressor from the first outlet of the heat exchanger to the combustor.

The oxidant supply to supply oxidant to the combustor may comprise a supply of a portion of the unused oxidant from the cathode of the at least one solid oxide fuel cell to the combustor, the compressor is arranged to supply a portion of the oxidant to the combustor and the heat exchanger is arranged to supply a portion of the combustor exhaust gases from the first outlet of the heat exchanger to the combustor. The compressor may be arranged to supply a portion of the oxidant to a mixer, the first outlet of the heat exchanger is arranged to supply a portion of the combustor exhaust gases to the mixer and the mixer is arranged to supply the portion of oxidant and the portion of exhaust gases to the combustor.

The oxidant supply to supply oxidant to the combustor may comprise a supply of a portion of the unused oxidant from the cathode of the at least one solid oxide fuel cell to the combustor, the compressor is arranged to supply a portion of the oxidant to the first inlet of the heat exchanger such that the portion of oxidant flows with the combustor exhaust gases into the first inlet of the heat exchanger and the heat exchanger is arranged to supply a portion of the combustor exhaust gases and a sub portion of the portion of oxidant from the first outlet of the heat exchanger to the first inlet of the heat exchanger. The compressor may be arranged to supply a portion of the oxidant to a mixer, the first outlet of the heat exchanger is arranged to supply a portion of the combustor exhaust gases and a sub portion of the oxidant to the mixer and the mixer is arranged to supply the portion of the oxidant from the compressor, the portion of the combustor exhaust gases and the sub portion of the portion of oxidant from the first outlet of the heat exchanger to the first inlet of the heat exchanger.

The oxidant supply to supply oxidant to the combustor comprises the compressor arranged to supply a portion of the oxidant to the combustor, a supply of a portion of the unused oxidant from the cathode of the at least one solid oxide fuel cell to the first inlet of the heat exchanger, and the heat exchanger is arranged to supply a portion of the combustor exhaust gases and a sub portion of the unused oxidant from the cathode of the at least one solid oxide fuel cell from the first outlet of the heat exchanger to the combustor. The compressor may be arranged to supply a portion of the oxidant to a mixer, the first outlet of the heat exchanger is arranged to supply a portion of the combustor exhaust gases and a sub portion of the unused oxidant from the cathode of the at least one solid oxide fuel cell to the mixer, the mixer is arranged to supply the portion of the combustor exhaust gases and the sub portion of the portion of the unused oxidant from the cathode of the at least one solid oxide fuel cell from the first outlet of the heat exchanger to the combustor.

The oxidant supply to supply oxidant to the combustor comprises the compressor arranged to supply a portion of the oxidant to the first inlet of the heat exchanger, the first outlet of the heat exchanger is arranged to supply a portion of the oxidant from the compressor to the combustor, the combustor is arranged to supply the combustor exhaust gases to the first inlet of the heat exchanger. The compressor may be arranged to supply a portion of the oxidant to a mixer, the combustor is arranged to supply the combustor exhaust gases to the mixer, the mixer is arranged to supply the portion of the oxidant from the compressor and the combustor exhaust gases from the combustor to the first inlet of the heat exchanger, the first outlet of the heat exchanger is arranged to supply a portion of the combustor exhaust gases and a sub portion of the portion of oxidant from the first outlet of the heat exchanger to the combustor. The fuel cell stack may be arranged to supply a portion of the unused oxidant from the cathode of the least one solid oxide fuel cell to the combustor.

The supply of a portion of the unused oxidant from the cathode of the at least one solid oxide fuel cell back to the cathode of the at least one solid oxide fuel cell may comprise means to mix the unused oxidant and the at least a portion of oxidant from the compressor. The means to mix the unused oxidant and the at least a portion of oxidant from the compressor may comprise a fan, a pump, a blower, an ejector or a turbomachine.

There may be means to mix the at least a portion of oxidant from the compressor and the combustor exhaust gases from the first outlet of the heat exchanger. The means to mix the at least a portion of the oxidant from the compressor and the combustor exhaust gases may comprise a fan, a pump, a blower, an ejector or a turbomachine.

There may be means to mix the at least a portion of oxidant from the compressor and the portion of the combustor exhaust gases and a sub portion of the portion of oxidant from the first outlet of the heat exchanger to the heat exchanger. The means to mix the at least a portion of the oxidant from the compressor and the portion of the combustor exhaust gases and a sub portion of the portion of oxidant may comprise a fan, a pump, a blower, an ejector or a turbomachine.

There may be means to mix the at least a portion of oxidant from the compressor and the portion of the combustor exhaust gases and a sub portion of the portion of unused oxidant from the first outlet of the heat exchanger. The means to mix the at least a portion of oxidant from the compressor and the portion of the combustor exhaust gases and the sub portion of the portion of unused oxidant may comprise a fan, a pump, a blower, an ejector or a turbomachine.

There may be means to mix the combustor exhaust gases and the portion of oxidant from the compressor. The means to mix combustor exhaust gases and the portion of oxidant from the compressor may comprise a fan, a pump, a blower, an ejector or a turbomachine.

The solid oxide fuel cell stack may be arranged to supply a portion of the unused fuel from the anode of the at least one solid oxide fuel cell back to the anode of the at least one solid oxide fuel cell. The supply of a portion of the unused fuel from the anode of the at least one solid oxide fuel cell back to the anode of the at least one solid oxide fuel cell may comprise means to mix the unused fuel and the fuel from the fuel supply. The means to mix the unused fuel and the fuel from the fuel supply may comprise a fan, a pump, a blower, an ejector or a turbomachine.

The compressor may be a compressor of a gas turbine engine and the turbine is a turbine of the gas turbine engine and the turbine is arranged to drive the compressor.

The turbine may be arranged to drive an electrical generator.

The present invention also provides a method of operating a solid oxide fuel cell system, the solid oxide fuel cell system comprising a solid oxide fuel cell stack, a compressor and a turbine, the solid oxide fuel cell stack comprising at least one solid oxide fuel cell, each solid oxide fuel cell comprising an electrolyte, an anode and a cathode, the method comprises supplying at least a portion of the oxidant from the compressor to the cathode of the at least one solid oxide fuel cell, supplying fuel to the anode of the at least one solid oxide fuel cell, supplying a portion of the unused oxidant from the cathode of the at least one solid oxide fuel cell back to the cathode of the at least one solid oxide fuel cell, supplying a portion of the unused fuel from the anode of the at least one solid oxide fuel cell to a combustor, supplying oxidant to the combustor, supplying the combustor exhaust gases to a first inlet of a heat exchanger, supplying at least a portion of the combustor exhaust gases from a first outlet of the heat exchanger to the turbine, supplying the at least a portion of the oxidant from the compressor and the unused oxidant from the cathode of the at least one solid oxide fuel cell to a second inlet of the heat exchanger to preheat the oxidant supplied to the cathode of the at least one solid oxide fuel cell, supplying the at least a portion of the oxidant from the compressor and the unused oxidant from the cathode of the at least one solid oxide fuel cell from a second outlet of the heat exchanger to the cathode of the at least one solid oxide fuel cell.

The present invention will be more fully described by way of example with reference to the accompanying drawings, in which:-
Figure 1 shows a solid oxide fuel cell system according to the prior art,
Figure 2 shows an alternative solid oxide fuel cell system according to the present invention;
Figure 3 shows a further alternative solid oxide fuel cell system according to the present invention;
Figure 4 shows another alternative solid oxide fuel cell system according to the present invention; and
Figure 5 shows an additional alternative solid oxide fuel cell system according to the present invention.
Figure 6 shows an additional alternative solid oxide fuel cell system according to the present invention.

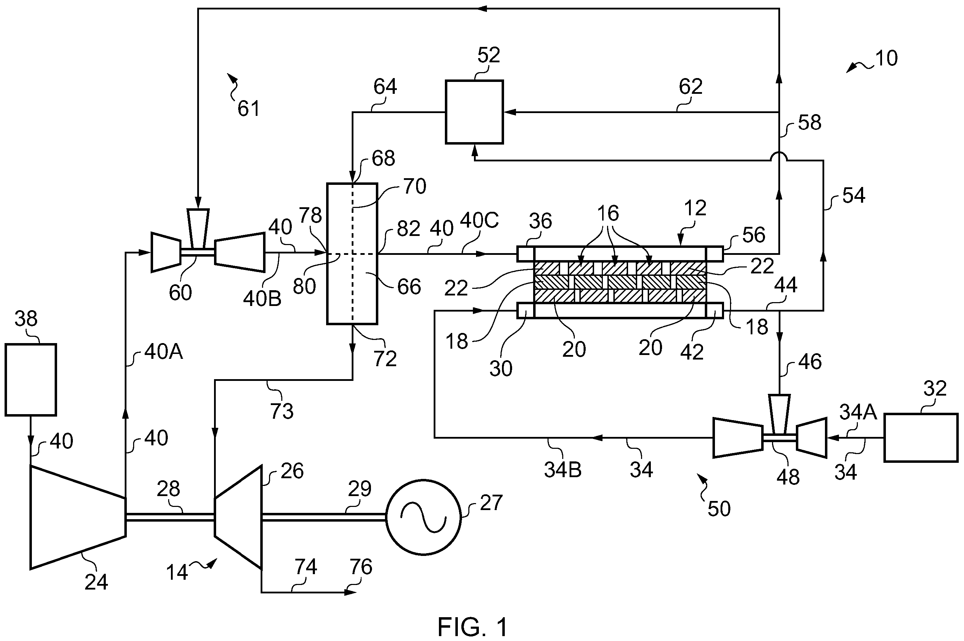

A solid oxide fuel cell system 10 according to the prior art is shown in figure 1 and the solid oxide fuel cell system 10 comprises a solid oxide fuel cell stack 12 and a gas turbine engine 14. The solid oxide fuel cell stack 12 comprises a plurality of solid oxide fuel cells 16 and each solid oxide fuel cell 16 comprises an electrolyte 18, an anode 20 and a cathode 22. The anode 20 and the cathode 22 are arranged on oppositely directed surfaces of the electrolyte 18.

The gas turbine engine 14 comprises a compressor 24 and a turbine 26, and the turbine 26 is arranged to drive the compressor 24 via a shaft 28. The turbine 26 of the gas turbine engine 14 is also arranged to drive an electrical generator 27 via a shaft 29. The anodes 20 of the solid oxide fuel cells 16 are supplied with a fuel, for example hydrogen, by a fuel manifold 30 and a fuel supply 32, for example hydrogen, is arranged to supply fuel to the fuel manifold 30 via duct 34. The cathodes 22 are supplied with an oxidant, for example oxygen, air etc, by an oxidant manifold 36 and an oxidant supply 38 is arranged to supply oxidant to the oxidant manifold 36 via a duct 40. The compressor 24 is located in the duct 40 and pressurises the supply of oxidant to the oxidant manifold 36.

The anodes 20 are provided with an unused fuel collection manifold 42 into which unused fuel is discharged. The unused fuel collection manifold 42 is connected to the duct 34 via ducts 44 and 46 such that a portion of the unused fuel is supplied, recirculated, to the fuel manifold 30. A fuel ejector 48 is provided to induce the supply, recirculation, of unused fuel from the unused fuel collection manifold 42 to the fuel manifold 30. The ducts 44, 46 and the fuel ejector 48 form means 50 to supply, recirculate, unused fuel from the anodes 20 of the solid oxide fuel cells 16 back to the anodes 20 of the solid oxide fuel cells 16. The fuel ejector 48 pressurises the unused fuel and mixes the unused fuel with the fuel supplied by the fuel supply 32 through the duct 34 to the fuel manifold 30. Only fuel from the fuel supply 32 flows in a first portion 34A of the duct 34 between the fuel supply 32 and the fuel ejector 48. The fuel from the fuel supply 32 and the portion of the unused fuel from the anodes 20 of the solid oxide fuel cells 16 after mixing by the fuel ejector 48 is supplied through a second portion 34B of the duct 34 to the fuel manifold 30.

The unused fuel collection manifold 42 is also connected to a combustor 52 via the duct 44 and a further duct 54 such that a second portion of the unused fuel is supplied to the combustor 52.

The cathodes 22 are provided with an unused oxidant collection manifold 56 into which unused oxidant is discharged. The unused oxidant collection manifold 56 is connected to the duct 40 via duct 58 such that a portion of the unused oxidant is supplied, recirculated, to the oxidant manifold 36. An oxidant ejector 60 is provided to induce the supply, recirculation, of unused oxidant from the unused oxidant collection manifold 56 to the oxidant manifold 36. The ducts 40 and 58 and the oxidant ejector 60 form means 61 to supply, recirculate, unused oxidant from the cathodes 22 of the solid oxide fuel cells 16 back to the cathodes 22 of the solid oxide fuel cells 16. The oxidant ejector 60 pressurises the unused oxidant and mixes the unused oxidant with the oxidant supplied by the compressor 24 through the duct 40 to the oxidant manifold 36.

The unused oxidant collection manifold 56 is connected to the combustor 52 via the duct 58 and a further duct 62 such that a second portion of the unused oxidant is supplied to the combustor 52.

The second portion of unused fuel supplied to the combustor 52 is burnt in the second portion of the unused oxidant supplied to the combustor 52 to produce hot exhaust gases. The hot exhaust gases produced in the combustor 52 are arranged to flow through a duct 64 to a heat exchanger 66. The hot exhaust gases are supplied to a first inlet 68 of the heat exchanger 66 and flow thought a first path 70 within the heat exchanger 66 to a first outlet 72 of the heat exchanger 66. The hot exhaust gases are then supplied from the first outlet 72 of the heat exchanger 66 to the turbine 26 through a duct 73. The hot exhaust gases drive the turbine 26 and then the hot exhaust gases flow through a duct 74 and are discharged through an exhaust 76. It may be possible to provide a recuperator in the duct 74 downstream of the turbine 26.

The oxidant from the compressor 24 and the portion of the unused oxidant from the cathodes 22 of the solid oxide fuel cells 16 after mixing by the oxidant ejector 60 is supplied through a second portion 40B of the duct 40 to a second inlet 78 of the heat exchanger 66 and flows through a second flow path 80 within the heat exchanger 66 to a second outlet 82 of the heat exchanger 66. The oxidant from the compressor 24 and the portion of the unused oxidant from the cathodes 22 of the solid oxide fuel cells 16 is then supplied from the second outlet 82 of the heat exchanger 66 to the oxidant manifold 36 via a third portion 40C of the duct 40. Only oxidant from the compressor 24 flows in a first portion 40A of the duct 40 between the compressor 24 and the oxidant ejector 60.

Thus, the hot exhaust gases from the combustor 52 flowing through the first flow path 70 within the heat exchanger 66 heats the oxidant from the oxidant supply 38 and the unused oxidant from the cathodes 22 flowing to the cathodes 22 flowing through the second flow path 80 within the heat exchanger 66.

The advantage is that the oxidant and unused oxidant supplied to the solid oxide fuel cells is indirectly heated up, using the heat exchanger, and there is no supply of combustion products, e.g. steam, from the solid oxide fuel cells back to the cathodes of the solid oxide fuel cells to detrimentally affect the solid oxide fuel cells.

The solid oxide fuel cell system retains the robustness, operability and affordability, but the solid oxide fuel cell stack operates in a more benign atmosphere. The working life of the solid oxide fuel cell stack is improved due to the removal of the supply of steam from the solid oxide fuel cell stack.

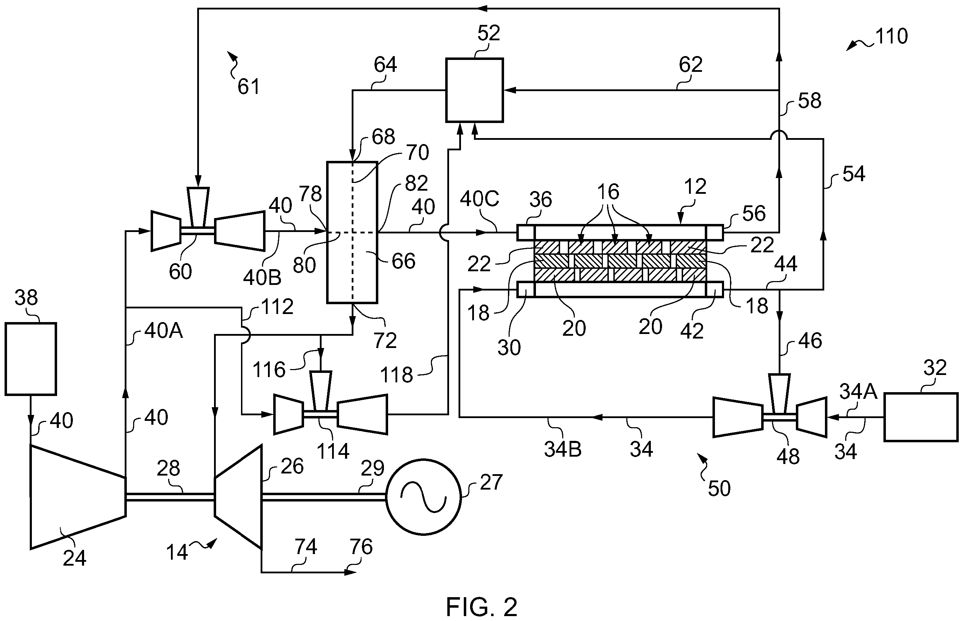

The ducts may be simple pipes or other arrangements to transfer the fuel, oxidant etc from one component to another component of the solid oxide fuel cell system. The oxidant ejector may be replaced by a fan, a blower, a pump or a turbomachine. The fuel ejector may be replaced by a fan, a blower, a pump or a turbomachine. A solid oxide fuel cell system 110 according to the present invention is shown in figure 2 and the solid oxide fuel cell system 110 comprises a solid oxide fuel cell stack 12 and a gas turbine engine 14. The solid oxide fuel cell system 110 is substantially the same as the solid oxide fuel cell system 10 shown in figure 1, and like parts are denoted by like numerals.

The solid oxide fuel cell system 110 differs to the solid oxide fuel cell system 10 in that the compressor 24 is arranged to supply a portion of the oxidant to the combustor 52 and the heat exchanger 66 is arranged to supply a portion of the combustor 52 exhaust gases from the first outlet 72 of the heat exchanger 66 to the combustor 52. In more detail a portion of the oxidant flowing through the first portion 40A of the duct 40 from the compressor 24 is supplied to a duct 112. The duct 112 supplies the portion of oxidant to the primary inlet of an ejector 114. The portion of the combustor 52 exhaust gases leaving the first outlet 72 of the heat exchanger 66 is supplied through a duct 116 to the secondary inlet of the ejector 114. The outlet of the ejector 114 is arranged to supply the portion of the oxidant from the compressor 24 and the portion of the exhaust gases from the first outlet 72 of the heat exchanger 66 to the combustor 52 through a duct 118. The duct 118 may be arranged to supply the portion of the oxidant from the compressor 24 and the portion of the exhaust gases from the first outlet 72 of the heat exchanger 66 to the combustor 52 with the unused oxidant in duct 62. This arrangement reduces the temperature at the inlet to the heat exchanger 66, e.g. and the outlet of the combustor 52, without reducing the heat transfer to the cool oxidant in the second portion 40B of the duct 40. The ejector 114 is used as a means for recycling exhaust gases from the combustor 52 back to the combustor 52 using the portion of oxidant supplied by the compressor 24.

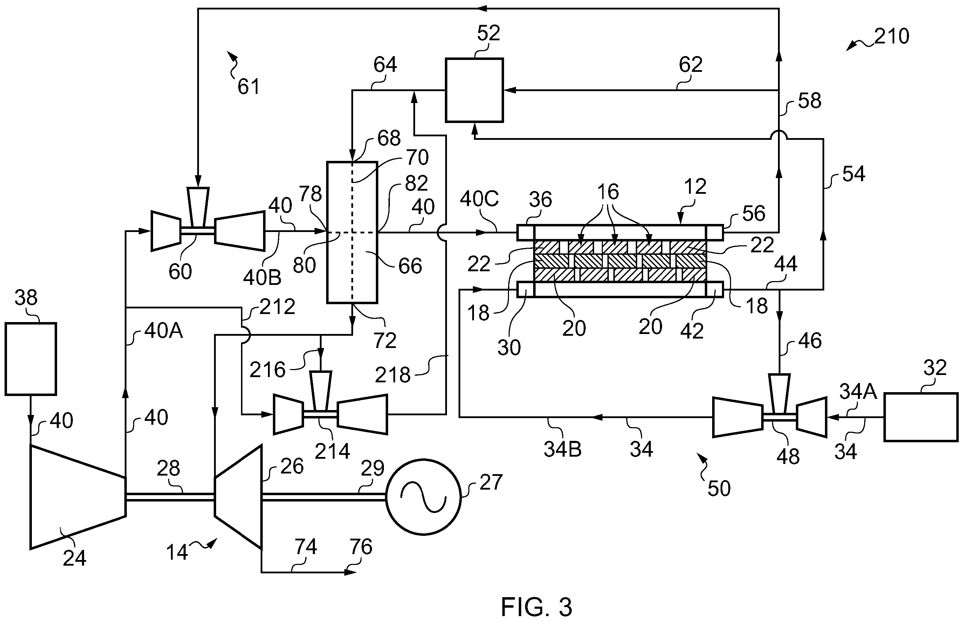

A further solid oxide fuel cell system 210 according to the present invention is shown in figure 3 and the solid oxide fuel cell system 210 comprises a solid oxide fuel cell stack 12 and a gas turbine engine 14. The solid oxide fuel cell system 210 is substantially the same as the solid oxide fuel cell system 10 shown in figure 1, and like parts are denoted by like numerals.

The solid oxide fuel cell system 210 differs to the solid oxide fuel cell system 10 in that the compressor 24 is arranged to supply a portion of the oxidant to the first inlet 68 of the heat exchanger 66 such that the portion of oxidant flows with the combustor 52 exhaust gases into the first inlet 68 of the heat exchanger 66 and the heat exchanger 66 is arranged to supply a portion of the combustor 52 exhaust gases and a sub portion of the portion of oxidant from the first outlet 72 of the heat exchanger 66 to the first inlet 68 of the heat exchanger 66.

In more detail a portion of the oxidant flowing through the first portion 40A of the duct 40 from the compressor 24 is supplied to a duct 212. The duct 212 supplies the portion of oxidant to the primary inlet of an ejector 214. The portion of the combustor 52 exhaust gases leaving the first outlet 72 of the heat exchanger 66 is supplied through a duct 216 to the secondary inlet of the ejector 214. The outlet of the ejector 214 is arranged to supply the portion of the oxidant from the compressor 24 and the portion of the exhaust gases from the first outlet 72 of the heat exchanger 66 to the first inlet 68 of the heat exchanger 66 through a duct 218. The duct 218 is arranged to supply the portion of oxidant from the compressor 24 and the exhaust gases from the first outlet 72 of the heat exchanger 66 to the duct 64 between the combustor 52 and the first inlet 68 of the heat exchanger 66. This arrangement also reduces the temperature at the inlet to the heat exchanger 66 and the outlet of the combustor 52. The ejector 214 is used as a means for recycling exhaust gases from the combustor 52 back to the heat exchanger 66 using the portion of oxidant supplied by the compressor 24.

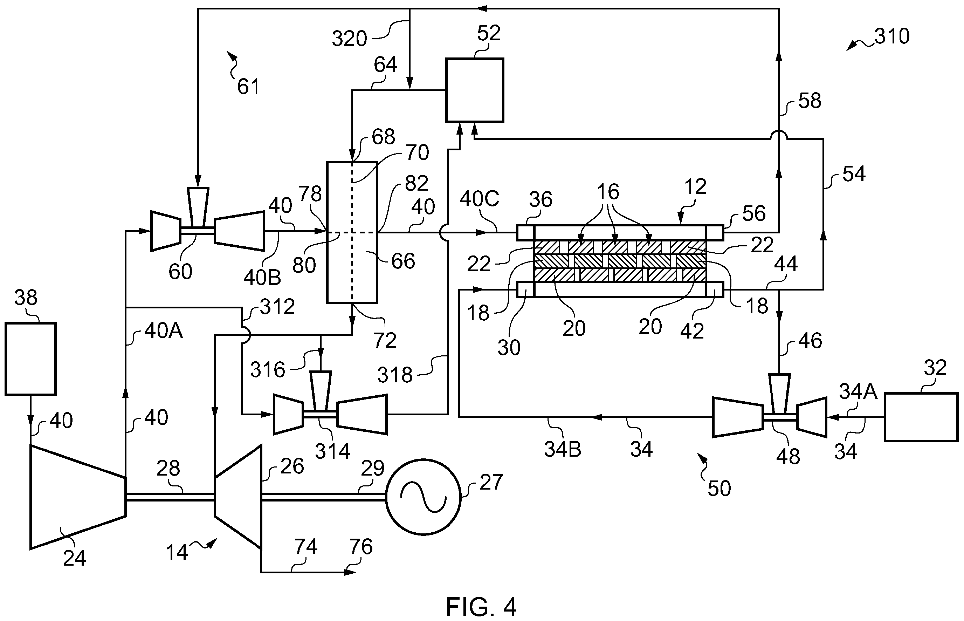

Another solid oxide fuel cell system 310 according to the present invention is shown in figure 4 and the solid oxide fuel cell system 310 comprises a solid oxide fuel cell stack 12 and a gas turbine engine 14. The solid oxide fuel cell system 310 is substantially the same as the solid oxide fuel cell system 10 shown in figure 1, and like parts are denoted by like numerals.

The solid oxide fuel cell system 310 differs to the solid oxide fuel cell system 10 in that the compressor 24 is arranged to supply a portion of the oxidant to the combustor 52 and the heat exchanger 66 is arranged to supply a portion of the combustor 52 exhaust gases from the first outlet 72 of the heat exchanger 66 to the combustor 52. In more detail a portion of the oxidant flowing through the first portion 40A of the duct 40 from the compressor 24 is supplied to a duct 312. The duct 312 supplies the portion of oxidant to the primary inlet of an ejector 314. The portion of the combustor 52 exhaust gases leaving the first outlet 72 of the heat exchanger 66 is supplied through a duct 316 to the secondary inlet of the ejector 314. The outlet of the ejector 314 is arranged to supply the portion of the oxidant from the compressor 24 and the portion of the exhaust gases from the first outlet 72 of the heat exchanger 66 to the combustor 52 through a duct 318. The solid oxide fuel cell system 310 also differs in that the unused oxidant collection manifold 56 is not directly connected to the combustor 52 to supply a second portion of the unused oxidant to the combustor 52. In the solid oxide fuel cell system 310 the unused oxidant collection manifold 56 is arranged to supply a second portion of the unused oxidant to the first inlet 68 of the heat exchanger 66 and the second portion of the unused oxidant is supplied through duct 58 and a duct 320 into the duct 64 between the combustor 52 and the first inlet 68 of the heat exchanger 66. This arrangement also reduces the temperature at the inlet to the heat exchanger 66 and the outlet of the combustor 52. The ejector 314 is used as a means for recycling exhaust gases from the combustor 52 back to the combustor 52 using the portion of oxidant supplied by the compressor 24.

The solid oxide fuel cell system 310 has an advantage of controlling the combustor 52 temperature because the oxidant from the ejector 314 is supplied directly to the combustor 52 and unused oxidant bypasses the combustor 52 and controlling the stability of the flame in the combustor 52.

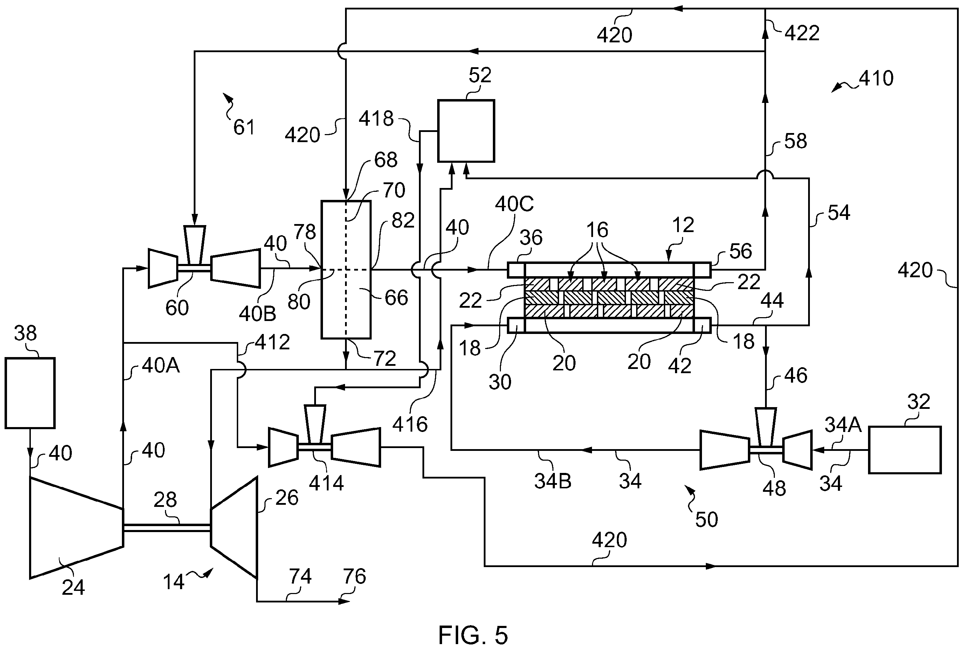

An additional solid oxide fuel cell system 410 according to the present invention is shown in figure 5 and the solid oxide fuel cell system 410 comprises a solid oxide fuel cell stack 12 and a gas turbine engine 14. The solid oxide fuel cell system 410 is substantially the same as the solid oxide fuel cell system 10 shown in figure 1, and like parts are denoted by like numerals.

The solid oxide fuel cell system 410 differs to the solid oxide fuel cell system 10 in that the compressor 24 is arranged to supply a portion of the oxidant to the first inlet 68 of the heat exchanger 66, the heat exchanger 66 is arranged to supply a portion of the combustor 52 exhaust gases from the first outlet 72 of the heat exchanger 66 to the combustor 56 and the combustor 52 is arranged to supply the exhaust gases to the first inlet 68 of the heat exchanger 66. In more detail a portion of the oxidant flowing through the first portion 40A of the duct 40 from the compressor 24 is supplied to a duct 412. The duct 412 supplies the portion of oxidant to the primary inlet of an ejector 414. The portion of the exhaust gases leaving the first outlet 72 of the heat exchanger 66 is supplied through a duct 416 to the combustor 52. The combustor 52 is arranged to supply exhaust gases to the secondary inlet of the ejector 414 through a duct 418. The outlet of the ejector 414 is arranged to supply the portion of the oxidant from the compressor 24 and the exhaust gases from the combustor 52 to the first inlet 68 of the heat exchanger 66 through a duct 420. The solid oxide fuel cell system 410 also differs in that the unused oxidant collection manifold 56 is not directly connected to the combustor 52 to supply a second portion of the unused oxidant to the combustor 52. In the solid oxide fuel cell system 410 the unused oxidant collection manifold 56 is arranged to supply a second portion of the unused oxidant to the first inlet 68 of the heat exchanger 66 and the second portion of unused oxidant is supplied through duct 58 and a duct 422 into the duct 420 between the ejector 414 and the first inlet 68 of the heat exchanger 66. This arrangement also reduces the temperature at the inlet to the heat exchanger 66 and the outlet of the combustor 52. The ejector 414 is used as a means for recycling exhaust gases from the combustor 52 back to the combustor 52 using the portion of oxidant supplied by the compressor 24.

The solid oxide fuel cell system 410 in figure 5 does not have an electrical generator driven by the gas turbine engine but it is equally possible for the gas turbine engine to be provided with an electrical generator.

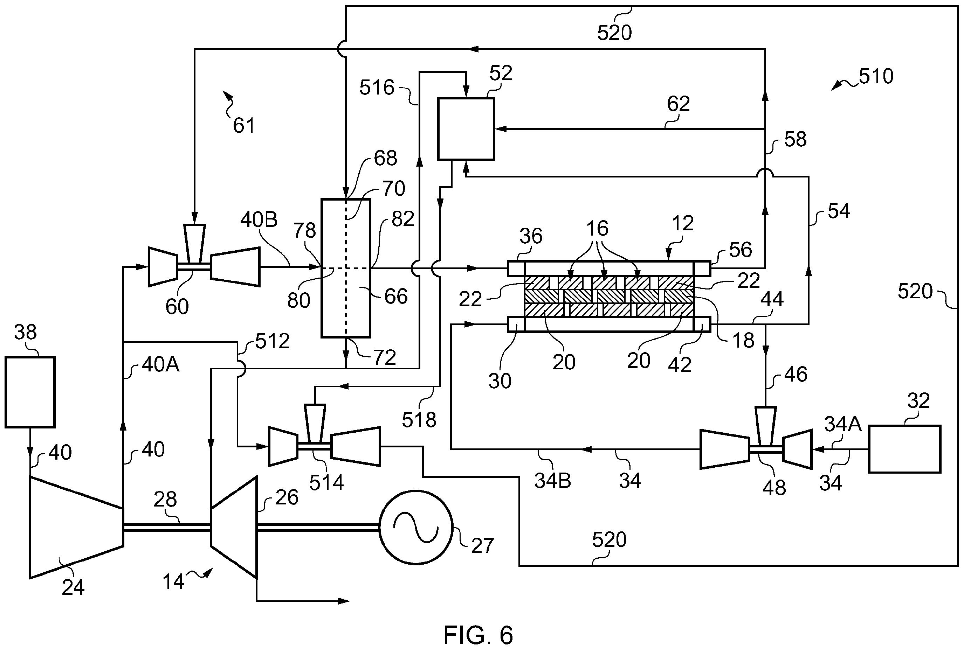

An additional solid oxide fuel cell system 510 according to the present invention is shown in figure 6 and the solid oxide fuel cell system 510 comprises a solid oxide fuel cell stack 12 and a gas turbine engine 14. The solid oxide fuel cell system 510 is substantially the same as the solid oxide fuel cell system 10 shown in figure 1, and like parts are denoted by like numerals.

The solid oxide fuel cell system 510 differs to the solid oxide fuel cell system 10 in that the compressor 24 is arranged to supply a portion of the oxidant to the first inlet 68 of the heat exchanger 66, the heat exchanger 66 is arranged to supply a portion of the combustor 52 exhaust gases from the first outlet 72 of the heat exchanger 66 to the combustor 56 and the combustor 52 is arranged to supply the exhaust gases to the first inlet 68 of the heat exchanger 66. In more detail a portion of the oxidant flowing through the first portion 40A of the duct 40 from the compressor 24 is supplied to a duct 512. The duct 512 supplies the portion of oxidant to the primary inlet of an ejector 514. The portion of the exhaust gases leaving the first outlet 72 of the heat exchanger 66 is supplied through a duct 516 to the combustor 52. The combustor 52 is arranged to supply exhaust gases to the secondary inlet of the ejector 514 through a duct 518. The outlet of the ejector 514 is arranged to supply the portion of the oxidant from the compressor 24 and the exhaust gases from the combustor 52 to the first inlet 68 of the heat exchanger 66 through a duct 520. In the solid oxide fuel cell system 510 the unused oxidant collection manifold 56 is directly connected through ducts 58 and 62 to the combustor 52 to supply a second portion of the unused oxidant to the combustor 52. This arrangement also reduces the temperature at the inlet to the heat exchanger 66 and the outlet of the combustor 52. The ejector 514 is used as a means for recycling exhaust gases from the combustor 52 back to the combustor 52 using the portion of oxidant supplied by the compressor 24. As in figure 1 the unused collection manifold 56 is directly connected to the second inlet of the oxidant ejector 60 to supply, recirculate, a first portion of the unused oxidant back to the oxidant manifold 36. The solid oxide fuel cell system 510 in figure 6 also has an electrical generator 27 driven by the gas turbine engine 14.

It is to be noted that in figures 2, 4, 5 and 6 the combustor, the heat exchanger and the ejector are arranged in a loop connected by ducts such that a portion of the combustor exhaust gases are recycled back to the combustor through the heat exchanger. It is to be noted that in figures 3 the heat exchanger and the ejector are arranged in a loop connected by ducts such that a portion of the combustor exhaust gases supplied from the combustor are recycled back to the heat exchanger.

The ejector 114, 214, 314, 414 or 514 in figures 2, 3, 4, 5 and 6 may be replaced by a fan, a blower, a pump or a turbomachine.

The figures have shown the use of an ejector to recirculate unused fuel from the fuel collection manifold back to the fuel manifold, however, it may be possible to arrange any of these solid oxide fuel cell systems such that there is no recirculating of unused fuel from the fuel collection manifold back to the fuel manifold.

Although the present invention has been described with reference to a single shaft gas turbine engine it is equally possible to use a multi-shaft gas turbine engine, e.g. a gas turbine engine comprising a low pressure compressor, a high pressure compressor, a high pressure turbine and a low pressure turbine and the low pressure turbine is arranged to drive the low pressure compressor via a first shaft and the high pressure turbine arranged to drive the high pressure compressor via a second shaft.

It may be possible to provide a solid oxide fuel cell system comprising a single solid oxide fuel cell stack having a combustor, oxidant ejector, fuel ejector and heat exchanger and in several embodiments a third ejector, but the solid oxide fuel cell stacks share a single gas turbine engine as mentioned above. It may also be possible to provide a solid oxide fuel cell system comprising a plurality of solid oxide fuel cell stacks and each solid oxide fuel cell stack has its own combustor, oxidant ejector, fuel ejector and heat exchanger and in several embodiments a third ejector, but the solid oxide fuel cell stacks share a single gas turbine engine. The latter arrangement allows each solid oxide fuel cell stack to be individually electrically isolated and the fuel to each solid oxide fuel cell stack to be individually isolated to improve the solid oxide fuel cell system reliability. The latter arrangement reduces the need for connecting ducts and associated thermal expansion problems. The latter arrangement produces higher pressure drops in the ejectors providing improved fuel and oxidant distribution in each solid oxide fuel cell stack.

## Claims

1. A solid oxide fuel cell system (10) comprising a solid oxide fuel cell stack (12), a compressor (24) and a turbine (26), the solid oxide fuel cell stack comprising at least one solid oxide fuel cell (16), each solid oxide fuel cell comprising an electrolyte (18), an anode (20) and a cathode (22), the compressor being arranged to supply at least a portion of the oxidant to the cathode of the at least one solid oxide fuel cell, a fuel supply being arranged to supply fuel to the anode of the at least one solid oxide fuel cell, the solid oxide fuel cell stack being arranged to supply a portion of the unused oxidant from the cathode of the at least one solid oxide fuel cell back to the cathode of the at least one solid oxide fuel cell, the solid oxide fuel cell stack being arranged to supply a portion of the unused fuel from the anode of the at least one solid oxide fuel cell to a combustor (52), an oxidant supply arranged to supply oxidant to the combustor, the combustor being arranged to supply the combustor exhaust gases to a first inlet of a heat exchanger (66), the heat exchanger being arranged to supply at least a portion of the combustor exhaust gases from a first outlet of the heat exchanger to the turbine, the at least a portion of the oxidant from the compressor and the unused oxidant from the cathode of the at least one solid oxide fuel cell being arranged to be supplied to a second inlet of the heat exchanger to preheat the oxidant supplied to the cathode of the at least one solid oxide fuel cell, the heat exchanger being arranged to supply the at least a portion of the oxidant from the compressor and the unused oxidant from the cathode of the at least one solid oxide fuel cell from a second outlet of the heat exchanger to the cathode of the at least one solid oxide fuel cell;
wherein the oxidant supply to supply oxidant to the combustor comprises a supply of a portion of the unused oxidant from the cathode of the at least one solid oxide fuel cell to the combustor; and
wherein the compressor is arranged to supply a portion of the oxidant to the combustor and the heat exchanger is arranged to supply a portion of the combustor exhaust gases from the first outlet of the heat exchanger to the combustor.

2. A solid oxide fuel cell system as claimed in claim 1 wherein the compressor is arranged to supply a portion of the oxidant to the first inlet of the heat exchanger such that the portion of oxidant flows with the combustor exhaust gases into the first inlet of the heat exchanger and the heat exchanger is arranged to supply a portion of the combustor exhaust gases and a sub portion of the portion of oxidant from the first outlet of the heat exchanger to the heat exchanger.

3. A solid oxide fuel cell system as claimed in claim 1 wherein a first duct connects the first outlet of the heat exchanger to the combustor and a second duct connects the combustor to the first inlet of the heat exchanger.

4. A solid oxide fuel cell system as claimed in claim 3 wherein the compressor is arranged either:
a) to supply a portion of the oxidant to the first duct such that the portion of oxidant is supplied to the combustor and the solid oxide fuel cell stack is arranged to supply a portion of the unused oxidant from the cathode of the at least one solid oxide fuel cell to the combustor; or
b) to supply a portion of the oxidant to the first duct such that the portion of oxidant is supplied to the combustor and the solid oxide fuel cell stack is arranged to supply a portion of the unused oxidant from the cathode of the at least one solid oxide fuel cell to the second duct; or
c) to supply a portion of the oxidant to the second duct and the solid oxide fuel cell stack is arranged to supply a portion of the unused oxidant from the cathode of the at least one solid oxide fuel cell to the second duct.

5. A solid oxide fuel cell system as claimed in claim 1 wherein a first duct connects the first outlet of the heat exchanger to the first inlet of the heat exchanger; wherein the compressor is arranged to supply a portion of the oxidant to the first duct such that the portion of oxidant is supplied to the heat exchanger and the solid oxide fuel cell stack is arranged to supply a portion of the unused oxidant from the cathode of the at least one solid oxide fuel cell to the combustor and the combustor is arranged to supply the combustor exhaust gases to the first duct.

6. A solid oxide fuel cell system as claimed in claim 1 wherein the compressor is arranged to supply a portion of the oxidant to the combustor, the solid oxide fuel cell stack is arranged to supply a portion of the unused oxidant from the cathode of the at least one solid oxide fuel cell to the first inlet of the heat exchanger and the heat exchanger is arranged to supply a portion of the combustor exhaust gases and a sub portion of the portion of unused oxidant from the first outlet of the heat exchanger to the combustor.

7. A solid oxide fuel cell system as claimed in claim 1 wherein the compressor is arranged to supply a portion of the oxidant to the first inlet of the heat exchanger with the combustor exhaust gases, the solid oxide fuel cell stack is arranged to supply a portion of the unused oxidant from the cathode of the at least one solid oxide fuel cell with the combustor exhaust gases and the portion of the oxidant from the compressor to the first inlet of the heat exchanger and the heat exchanger is arranged to supply a portion of the combustor exhaust gases, a sub portion of the portion of unused oxidant from cathode of the at least one solid oxide fuel cell and a sub portion of the portion of oxidant from the compressor from the first outlet of the heat exchanger to the combustor.

8. A solid oxide fuel cell system as claimed in claim 1 wherein the oxidant supply to supply oxidant to the combustor comprises a supply of a portion of the unused oxidant from the cathode of the at least one solid oxide fuel cell to the combustor, the compressor is arranged to supply a portion of the oxidant to the combustor and the heat exchanger is arranged to supply a portion of the combustor exhaust gases from the first outlet of the heat exchanger to the combustor; optionally wherein the compressor is arranged to supply a portion of the oxidant to a mixer, the first outlet of the heat exchanger is arranged to supply a portion of the combustor exhaust gases to the mixer and the mixer is arranged to supply the portion of oxidant and the portion of exhaust gases to the combustor.

9. A solid oxide fuel cell system as claimed in claim 1 wherein the oxidant supply to supply oxidant to the combustor comprises a supply of a portion of the unused oxidant from the cathode of the at least one solid oxide fuel cell to the combustor, the compressor is arranged to supply a portion of the oxidant to the first inlet of the heat exchanger such that the portion of oxidant flows with the combustor exhaust gases into the first inlet of the heat exchanger and the heat exchanger is arranged to supply a portion of the combustor exhaust gases and a sub portion of the portion of oxidant from the first outlet of the heat exchanger to the first inlet of the heat exchanger; optionally wherein the compressor is arranged to supply a portion of the oxidant to a mixer, the first outlet of the heat exchanger is arranged to supply a portion of the combustor exhaust gases and a sub portion of the oxidant to the mixer and the mixer is arranged to supply the portion of the oxidant from the compressor, the portion of the combustor exhaust gases and the sub portion of the portion of oxidant from the first outlet of the heat exchanger to the first inlet of the heat exchanger.

10. A solid oxide fuel cell system as claimed in claim 1 wherein the oxidant supply to supply oxidant to the combustor comprises the compressor arranged to supply a portion of the oxidant to the combustor, a supply of a portion of the unused oxidant from the cathode of the at least one solid oxide fuel cell to the first inlet of the heat exchanger, and the heat exchanger is arranged to supply a portion of the combustor exhaust gases and a sub portion of the unused oxidant from the cathode of the at least one solid oxide fuel cell from the first outlet of the heat exchanger to the combustor; optionally wherein the compressor is arranged to supply a portion of the oxidant to a mixer, the first outlet of the heat exchanger is arranged to supply a portion of the combustor exhaust gases and a sub portion of the unused oxidant from the cathode of the at least one solid oxide fuel cell to the mixer, the mixer is arranged to supply the portion of the combustor exhaust gases and the sub portion of the portion of the unused oxidant from the cathode of the at least one solid oxide fuel cell from the first outlet of the heat exchanger to the combustor.

11. A solid oxide fuel cell system as claimed in claim 1 wherein the oxidant supply to supply oxidant to the combustor comprises the compressor arranged to supply a portion of the oxidant to the first inlet of the heat exchanger, the first outlet of the heat exchanger is arranged to supply a portion of the oxidant from the compressor to the combustor, the combustor is arranged to supply the combustor exhaust gases to the first inlet of the heat exchanger; optionally wherein the compressor is arranged to supply a portion of the oxidant to a mixer, the combustor is arranged to supply the combustor exhaust gases to the mixer, the mixer is arranged to supply the portion of the oxidant from the compressor and the combustor exhaust gases from the combustor to the first inlet of the heat exchanger, the first outlet of the heat exchanger is arranged to supply a portion of the combustor exhaust gases and a sub portion of the portion of oxidant from the first outlet of the heat exchanger to the combustor.

12. A solid oxide fuel cell system as claimed in:
claim 1, comprising means to mix the at least a portion of oxidant from the compressor and the combustor exhaust gases from the first outlet of the heat exchanger; or
claim 2, comprising means to mix the at least a portion of oxidant from the compressor and the portion of the combustor exhaust gases and a sub portion of the portion of oxidant from the first outlet of the heat exchanger to the heat exchanger; or
claim 6, comprising means to mix the at least a portion of oxidant from the compressor and the portion of the combustor exhaust gases and a sub portion of the portion of unused oxidant from the first outlet of the heat exchanger; or
claim 7, comprising means to mix the combustor exhaust gases and the portion of oxidant from the compressor;
wherein the means to mix optionally comprises a fan, a pump, a blower, an ejector or a turbomachine.

13. A solid oxide fuel cell system as claimed in claim 3 wherein the compressor is arranged to supply a portion of the oxidant to the second duct and the solid oxide fuel cell stack is arranged to supply a portion of the unused oxidant from the cathode of the at least one solid oxide fuel cell to the combustor.

14. A solid oxide fuel cell system as claimed in claim 11, wherein the fuel cell stack is arranged to supply a portion of the unused oxidant from the cathode of the least one solid oxide fuel cell to the combustor.

15. A method of operating a solid oxide fuel cell system, the solid oxide fuel cell system comprising a solid oxide fuel cell stack, a compressor and a turbine, the solid oxide fuel cell stack comprising at least one solid oxide fuel cell, each solid oxide fuel cell comprising an electrolyte, an anode and a cathode, the method comprises supplying at least a portion of the oxidant from the compressor to the cathode of the at least one solid oxide fuel cell, supplying fuel to the anode of the at least one solid oxide fuel cell, supplying a portion of the unused oxidant from the cathode of the at least one solid oxide fuel cell back to the cathode of the at least one solid oxide fuel cell, supplying a portion of the unused fuel from the anode of the at least one solid oxide fuel cell to a combustor, supplying oxidant to the combustor, supplying the combustor exhaust gases to a first inlet of a heat exchanger, supplying at least a portion of the combustor exhaust gases from a first outlet of the heat exchanger to the turbine, supplying the at least a portion of the oxidant from the compressor and the unused oxidant from the cathode of the at least one solid oxide fuel cell to a second inlet of the heat exchanger to preheat the oxidant supplied to the cathode of the at least one solid oxide fuel cell, supplying the at least a portion of the oxidant from the compressor and the unused oxidant from the cathode of the at least one solid oxide fuel cell from a second outlet of the heat exchanger to the cathode of the at least one solid oxide fuel cell;
wherein supplying oxidant to the combustor comprises supplying a portion of the unused oxidant from the cathode of the at least one solid oxide fuel cell to the combustor; and
wherein the compressor supplies a portion of the oxidant to the combustor and the heat exchanger supplies a portion of the combustor exhaust gases from the first outlet of the heat exchanger to the combustor.

## Patentansprüche

1. Festoxid-Brennstoffzellensystem (10), das einen Festoxid-Brennstoffzellenstapel (12), einen Kompressor (24) und eine Turbine (26) umfasst, wobei der Festoxid-Brennstoffzellenstapel mindestens eine Festoxid-Brennstoffzelle (16) umfasst,
wobei jede Festoxid-Brennstoffzelle einen Elektrolyten (18), eine Anode (20) und eine Kathode (22) umfasst, wobei der Kompressor angeordnet wird, um mindestens eine Menge des Oxidationsmittels der Kathode der mindestens einen Festoxid-Brennstoffzelle zuzuführen, wobei eine Brennstoffzufuhr angeordnet wird, um der Anode der mindestens einen Festoxid-Brennstoffzelle Brennstoff zuzuführen, wobei der Festoxid-Brennstoffzellenstapel angeordnet wird, um eine Menge des ungenutzten Oxidationsmittels von der Kathode der mindestens einen Festoxid-Brennstoffzelle an die Kathode der mindestens einen Festoxid-Brennstoffzelle zurückzuführen, wobei der Festoxid-Brennstoffzellenstapel angeordnet wird, um einer Brennkammer (52) eine Menge des ungenutzten Brennstoffs von der Anode der mindestens einen Festoxid-Brennstoffzelle zuzuführen, wobei eine Oxidationsmittelzufuhr angeordnet wird, um der Brennkammer Oxidationsmittel zuzuführen, wobei die Brennkammer angeordnet wird, um die Brennkammerabgase einem ersten Einlass eines Wärmetauschers (66) zuzuführen, wobei der Wärmetauscher angeordnet wird, um der Turbine mindestens eine Menge der Brennkammerabgase von einem ersten Auslass des Wärmetauschers zuzuführen, wobei die mindestens eine Menge des Oxidationsmittels von dem Kompressor und das ungenutzte Oxidationsmittel von der Kathode der mindestens einen Festoxid-Brennstoffzelle angeordnet werden, um einem zweiten Einlass des Wärmetauschers zugeführt zu werden, um das der Kathode der mindestens einen Festoxid-Brennstoffzelle zugeführte Oxidationsmittel vorzuheizen, wobei der Wärmetauscher angeordnet wird, um die mindestens eine Menge des Oxidationsmittels von dem Kompressor und das ungenutzte Oxidationsmittel von der Kathode der mindestens einen Festoxid-Brennstoffzelle von einem zweiten Auslass des Wärmetauschers der Kathode der mindestens einen Festoxid-Brennstoffzelle zuzuführen;
wobei die Oxidationsmittelzufuhr, um der Brennkammer Oxidationsmittel zuzuführen, eine Zufuhr einer ungenutzten Menge des Oxidationsmittels von der Kathode der mindestens einen Festoxid-Brennstoffzelle an die Brennkammer umfasst; und
wobei der Kompressor angeordnet wird, um der Brennkammer eine Menge des Oxidationsmittels zuzuführen und der Wärmetauscher angeordnet wird, um der Brennkammer von dem ersten Auslass des Wärmetauschers eine Menge der Brennkammerabgase zuzuführen.

2. Festoxid-Brennstoffzellensystem nach Anspruch 1, wobei der Kompressor angeordnet wird, um dem ersten Einlass des Wärmetauschers eine Menge des Oxidationsmittels so zuzuführen, dass die Menge des Oxidationsmittels mit den Brennkammerabgasen in den ersten Einlass des Wärmetauschers fließt und der Wärmetauscher angeordnet wird, um dem Wärmetauscher von dem ersten Auslass des Wärmetauschers eine Menge der Brennkammerabgase und eine Teilmenge der Menge des Oxidationsmittels zuzuführen.

3. Festoxid-Brennstoffzellensystem nach Anspruch 1, wobei ein erster Kanal den ersten Auslass des Wärmetauschers mit der Brennkammer verbindet und ein zweiter Kanal die Brennkammer mit dem ersten Einlass des Wärmetauschers verbindet.

4. Festoxid-Brennstoffzellensystem nach Anspruch 3, wobei der Kompressor entweder angeordnet wird:
a) um dem ersten Kanal eine Menge des Oxidationsmittels so zuzuführen, dass die Menge des Oxidationsmittels der Brennkammer zugeführt wird und der Festoxid-Brennstoffzellenstapel angeordnet wird, um der Brennkammer von der Kathode der mindestens einen Festoxid-Brennstoffzelle eine Menge des ungenutzten Oxidationsmittels zuzuführen; oder
b) um dem ersten Kanal eine Menge des Oxidationsmittels so zuzuführen, dass die Menge des Oxidationsmittels der Brennkammer zugeführt wird und der Festoxid-Brennstoffzellenstapel angeordnet wird, um dem zweiten Kanal von der Kathode der mindestens einen Festoxid-Brennstoffzelle eine Menge des ungenutzten Oxidationsmittels zuzuführen; oder
c) um dem zweiten Kanal eine Menge des Oxidationsmittels zuzuführen und die Festoxid-Brennstoffzellenstapel angeordnet wird, um dem zweiten Kanal von der Kathode der mindestens einen Festoxid-Brennstoffzelle eine Menge des ungenutzten Oxidationsmittels zuzuführen.

5. Festoxid-Brennstoffzellensystem nach Anspruch 1, wobei ein erster Kanal den ersten Auslass des Wärmetauschers mit dem ersten Einlass des Wärmetauschers verbindet; wobei der Kompressor angeordnet wird, um dem ersten Kanal eine Menge des Oxidationsmittels so zuzuführen, dass dem Wärmetauscher die Menge des Oxidationsmittels zugeführt wird und der Festoxid-Brennstoffzellenstapel angeordnet wird, um der Brennkammer von der Kathode der mindestens einen Festoxid-Brennstoffzelle eine Menge des ungenutzten Oxidationsmittels zuzuführen und die Brennkammer angeordnet wird, um dem ersten Kanal die Brennkammerabgase zuzuführen.

6. Festoxid-Brennstoffzellensystem nach Anspruch 1, wobei der Kompressor angeordnet wird, um der Brennkammer eine Menge des Oxidationsmittels zuzuführen, der Festoxid-Brennstoffzellenstapel angeordnet wird, um dem ersten Einlass des Wärmetauschers von der Kathode der mindestens einen Festoxid-Brennstoffzelle eine Menge des ungenutzten Oxidationsmittels zuzuführen und der Wärmetauscher angeordnet wird, um der Brennkammer von dem ersten Auslass des Wärmetauschers eine Menge der Brennkammerabgase und eine Teilmenge der Menge des ungenutzten Oxidationsmittels zuzuführen.

7. Festoxid-Brennstoffzellensystem nach Anspruch 1, wobei der Kompressor angeordnet wird, um dem ersten Einlass des Wärmetauschers eine Menge des Oxidationsmittels mit den Brennkammerabgasen zuzuführen, der Festoxid-Brennstoffzellenstapel angeordnet wird, um mit den Brennkammerabgasen von der Kathode der mindestens einen Festoxid-Brennstoffzelle eine Menge des ungenutzten Oxidationsmittels und die Menge des Oxidationsmittels von dem Kompressor zu dem ersten Einlass des Wärmetauschers zuzuführen und der Wärmetauscher angeordnet wird, um der Brennkammer eine Menge der Brennkammerabgase, eine Teilmenge der Menge des ungenutzten Oxidationsmittels von der Kathode der mindestens einen Festoxid-Brennstoffzelle und eine Teilmenge der Menge des Oxidationsmittels von dem Kompressor von dem ersten Auslass des Wärmetauschers zuzuführen.

8. Festoxid-Brennstoffzellensystem nach Anspruch 1, wobei die Oxidationsmittelzufuhr, um der Brennkammer Oxidationsmittel zuzuführen, eine Zufuhr eines Teils des ungenutzten Oxidationsmittels von der Kathode der mindestens einen Festoxid-Brennstoffzelle an die Brennkammer umfasst, der Kompressor angeordnet wird, um der Brennkammer eine Menge des Oxidationsmittels zuzuführen und der Wärmetauscher angeordnet wird, um der Brennkammer eine Menge der Brennkammerabgase von dem Auslass des ersten Wärmetauschers zuzuführen; wobei wahlweise der Kompressor angeordnet wird, um einem Mischer eine Menge des Oxidationsmittels zuzuführen, wobei der erste Auslass des Wärmetauschers angeordnet wird, um dem Mischer eine Menge der Brennkammerabgase zuzuführen und der Mischer angeordnet wird, um der Brennkammer die Menge des Oxidationsmittels und die Menge des Abgases zuzuführen.

9. Festoxid-Brennstoffzellensystem nach Anspruch 1, wobei die Oxidationsmittelzufuhr, um der Brennkammer Oxidationsmittel zuzuführen, eine Zufuhr eines Teils des ungenutzten Oxidationsmittels von der Kathode der mindestens einen Festoxid-Brennstoffzelle an die Brennkammer umfasst, der Kompressor angeordnet wird, um dem ersten Einlass des Wärmetauscher eine Menge des Oxidationsmittels so zuzuführen, dass die Menge des Oxidationsmittels mit den Brennkammerabgasen in den ersten Einlass des Wärmetauschers fließt und der Wärmetauscher angeordnet wird, um dem ersten Einlass des Wärmetauschers eine Menge der Brennkammerabgase und eine Teilmenge der Menge des Oxidationsmittels von dem ersten Auslass des Wärmetauschers zuzuführen; wobei wahlweise der Kompressor angeordnet wird, um einem Mischer eine Menge des Oxidationsmittels zuzuführen, wobei der erste Auslass des Wärmetauschers angeordnet wird, um dem Mischer eine Menge der Brennkammerabgase und eine Teilmenge des Oxidationsmittels zuzuführen und der Mischer angeordnet wird, um die Menge des Oxidationsmittels des Kompressors, die Menge der Brennkammerabgase und die Teilmenge der Menge des Oxidationsmittels von dem ersten Auslass des Wärmetauschers dem ersten Einlass des Wärmetauschers zuzuführen.

10. Festoxid-Brennstoffzellensystem nach Anspruch 1, wobei die Oxidationsmittelzufuhr, um der Brennkammer Oxidationsmittel zuzuführen, den Kompressor, der angeordnet wird, um der Brennkammer eine Menge des Oxidationsmittels zuzuführen, eine Zufuhr eines Teils des ungenutzten Oxidationsmittels von der Kathode der mindestens einen Festoxid-Brennstoffzelle an den ersten Einlass des Wärmetauschers umfasst und der Wärmetauscher angeordnet wird, um der Brennkammer eine Menge der Brennkammerabgase und eine Teilmenge des ungenutzten Oxidationsmittels von der Kathode der mindestens einen Festoxid-Brennstoffzelle von dem ersten Auslass des Wärmetauschers zuzuführen; wobei wahlweise der Kompressor angeordnet wird, um einem Mischer eine Menge des Oxidationsmittels zuzuführen, der erste Auslass des Wärmetauschers angeordnet wird, um dem Mischer von der Kathode eine Menge der Brennkammerabgase und eine Teilmenge des ungenutzten Oxidationsmittels der mindestens einen Festoxid-Brennstoffzelle zuzuführen, der Mischer angeordnet wird, um der Brennkammer von der Kathode der mindestens einen Festoxid-Brennstoffzelle die Menge der Brennkammerabgase und die Teilmenge der Menge des ungenutzten Oxidationsmittels von dem ersten Auslass des Wärmetauschers zuzuführen.

11. Festoxid-Brennstoffzellensystem nach Anspruch 1, wobei die Oxidationsmittelzufuhr, um der Brennkammer Oxidationsmittel zuzuführen, den Kompressor, der angeordnet wird, um dem ersten Einlass des Wärmetauschers eine Menge des Oxidationsmittels zuzuführen, den ersten Auslass des Wärmetauschers, der angeordnet wird, um der Brennkammer eine Menge des Oxidationsmittels des Kompressors zuzuführen, die Brennkammer, die angeordnet wird, um dem ersten Einlass des Wärmetauschers die Brennkammerabgase zuzuführen, umfasst; wobei wahlweise der Kompressor angeordnet wird, um einem Mischer eine Menge des Oxidationsmittels zuzuführen, die Brennkammer angeordnet wird, um dem Mischer die Brennkammerabgase zuzuführen, der Mischer angeordnet wird, um dem ersten Einlass des Wärmetauschers die Menge des Oxidationsmittels des Kompressors und die Brennkammerabgase der Brennkammer zuzuführen, der erste Auslass des Wärmetauschers angeordnet wird, um der Brennkammer eine Menge der Brennkammerabgase und eine Teilmenge der Menge des Oxidationsmittels von dem ersten Auslass des Wärmetauschers zuzuführen.

12. Festoxid-Brennstoffzellensystem nach:
Anspruch 1, das Mittel umfasst, um die mindestens eine Menge des Oxidationsmittels des Kompressors und die Brennkammerabgase von dem ersten Auslass des Wärmetauschers zu mischen; oder
Anspruch 2, das Mittel umfasst, um die mindestens eine Menge des Oxidationsmittels des Kompressors und die Menge der Brennkammerabgase und eine Teilmenge der Menge des Oxidationsmittels von dem ersten Auslass des Wärmetauschers an den Wärmetauscher zu mischen; oder
Anspruch 6, das Mittel umfasst, um die mindestens eine Menge des Oxidationsmittels des Kompressors und die Menge der Brennkammerabgase und eine Teilmenge der Menge des ungenutzten Oxidationsmittels von dem ersten Auslass des Wärmetauschers zu mischen; oder
Anspruch 7, das Mittel umfasst, um die Brennkammerabgase und die Menge des Oxidationsmittels des Kompressors zu mischen;
wobei das Mittel, um wahlweise zu mischen einen Lüfter, eine Pumpe, ein Gebläse, einen Auswerfer oder eine Turbomaschine umfasst.

13. Festoxid-Brennstoffzellensystem nach Anspruch 3, wobei der Kompressor angeordnet wird, um dem zweiten Kanal eine Menge des Oxidationsmittels zuzuführen und der Festoxid-Brennstoffzellenstapel angeordnet wird, um der Brennkammer von der Kathode der mindestens einen Festoxid-Brennstoffzelle eine Menge des ungenutzten Oxidationsmittels zuzuführen.

14. Festoxid-Brennstoffzellensystem nach Anspruch 11, wobei der Brennstoffzellenstapel angeordnet wird, um der Brennkammer von der Kathode der mindestens einen Festoxid-Brennstoffzelle eine Menge des ungenutzten Oxidationsmittels zuzuführen.

15. Verfahren zum Betreiben eines Festoxid-Brennstoffzellensystem, wobei das Festoxid-Brennstoffzellensystem einen Festoxid-Brennstoffzellenstapel, einen Kompressor und eine Turbine umfasst, wobei der Festoxid-Brennstoffzellenstapel mindestens eine Festoxid-Brennstoffzelle umfasst, wobei jede Festoxid-Brennstoffzelle einen Elektrolyten, eine Anode und eine Kathode umfasst, wobei das Verfahren Zuführen mindestens einer Menge des Oxidationsmittels von dem Kompressor an die Kathode der mindesten einen Festoxid-Brennstoffzelle, Zuführen von Brennstoff an die Anode der mindestens einen Festoxid-Brennstoffzelle, Zuführen einer Menge des ungenutzten Oxidationsmittels von der Kathode der mindestens einen Festoxid-Brennstoffzelle zurück zu der Kathode der mindestens einen Festoxid-Brennstoffzelle, Zuführen einer Menge des ungenutzten Brennstoffs von der Anode der mindestens einen Festoxid-Brennstoffzelle an eine Brennkammer, Zuführen von Oxidationsmittel an die Brennkammer, Zuführen der Brennkammerabgase an einen ersten Einlass des Wärmetauschers, Zuführen der mindestens einen Menge der Brennkammerabgase von einem ersten Auslass des Wärmetauscher an die Turbine, Zuführen der mindestens einen Menge des Oxidationsmittels von dem Kompressor und des ungenutzten Oxidationsmittels von der Kathode der mindestens einen Festoxid-Brennstoffzelle an einen zweiten Einlass des Wärmetauschers, um das der Kathode der mindestens einen Festoxid-Brennstoffzelle zugeführte Oxidationsmittel vorzuheizen, Zuführen der mindestens einen Menge des Oxidationsmittels von dem Kompressor und des ungenutzten Oxidationsmittels von der Kathode der mindestens einen Festoxid-Brennstoffzelle von einem zweiten Auslass des Wärmetauschers an die Kathode der mindestens einen Festoxid-Brennstoffzelle umfasst;
wobei Zuführen von Oxidationsmittel, an die Brennkammer Zuführen eines Teils des ungenutzten Oxidationsmittels von der Kathode der mindestens einen Festoxid-Brennstoffzelle an die Brennkammer umfasst; und
wobei der Kompressor der Brennkammer eine Menge des Oxidationsmittels zuführt und der Wärmetauscher der Brennkammer eine Menge der Brennkammerabgase von dem ersten Auslass des Wärmetauschers zuführt.

## Revendications

1. Système de pile à combustible à oxyde solide (10) comprenant un empilement de piles à combustible à oxyde solide (12), un compresseur (24) et une turbine (26), l'empilement de piles à combustible à oxyde solide comprenant au moins une pile à combustible à oxyde solide (16),
chaque pile à combustible à oxyde solide comprenant un électrolyte (18), une anode (20) et une cathode (22), le compresseur étant agencé pour fournir au moins une partie de l'oxydant à la cathode de la au moins une pile à combustible à oxyde solide, une alimentation en combustible étant agencée pour fournir un combustible à l'anode de la au moins une pile à combustible à oxyde solide, l'empilement de piles à combustible à oxyde solide étant agencé pour renvoyer une partie de l'oxydant inutilisé provenant de la cathode de la au moins une pile à combustible à oxyde solide à la cathode de la au moins une pile à combustible à oxyde solide, l'empilement de piles à combustible à oxyde solide étant agencé pour envoyer une partie du combustible inutilisé provenant de l'anode de la au moins une pile à combustible à oxyde solide à la chambre de combustion (52), une alimentation en oxydant agencée pour fournir un oxydant à la chambre de combustion, ladite chambre de combustion étant agencée pour envoyer les gaz d'échappement de la chambre de combustion à une première entrée d'un échangeur de chaleur (66), ledit échangeur de chaleur étant agencé pour envoyer au moins une partie des gaz d'échappement de la chambre de combustion provenant d'une première sortie de l'échangeur de chaleur à la turbine, la au moins une partie de l'oxydant provenant du compresseur et l'oxydant inutilisé provenant de la cathode de la au moins une pile à combustible à oxyde solide étant agencés pour être envoyés à une seconde entrée de l'échangeur de chaleur pour préchauffer l'oxydant envoyé à la cathode de la au moins une pile à combustible à oxyde solide, ledit échangeur de chaleur étant agencé pour envoyer la au moins une partie de l'oxydant provenant du compresseur et l'oxydant inutilisé provenant de la cathode de la au moins une pile à combustible à oxyde solide, depuis une seconde sortie de l'échangeur de chaleur jusqu'à la cathode de la au moins une pile à combustible à oxyde solide ;
ladite alimentation en oxydant destinée à fournir un oxydant à la chambre de combustion comprenant l'envoi d'une partie de l'oxydant inutilisé provenant de la cathode de la au moins une pile à combustible à oxyde solide à la chambre de combustion ; et
ledit compresseur étant agencé pour fournir une partie de l'oxydant à la chambre de combustion et ledit échangeur de chaleur étant agencé pour envoyer une partie des gaz d'échappement de la chambre de combustion depuis la première sortie de l'échangeur de chaleur jusqu'à la chambre de combustion.

2. Système de pile à combustible à oxyde solide selon la revendication 1, ledit compresseur étant agencé pour fournir une partie de l'oxydant à la première entrée de l'échangeur de chaleur de sorte que la partie d'oxydant s'écoule avec les gaz d'échappement de la chambre de combustion dans la première entrée de l'échangeur de chaleur et ledit échangeur de chaleur étant agencé pour envoyer une partie des gaz d'échappement de la chambre de combustion et une sous-partie de la partie d'oxydant depuis la première sortie de l'échangeur de chaleur jusqu'à l'échangeur de chaleur.

3. Système de pile à combustible à oxyde solide selon la revendication 1, un premier conduit raccordant la première sortie de l'échangeur de chaleur à la chambre de combustion et un second conduit raccordant la chambre de combustion à la première entrée de l'échangeur de chaleur.

4. Système de pile à combustible à oxyde solide selon la revendication 3, ledit compresseur étant agencé :
a) pour fournir une partie de l'oxydant au premier conduit de sorte que la partie d'oxydant soit fournie à la chambre de combustion et l'empilement de piles à combustible à oxyde solide étant agencé pour envoyer une partie de l'oxydant inutilisé provenant de la cathode de la au moins une pile à combustible à oxyde solide à la chambre de combustion ; ou
b) pour fournir une partie de l'oxydant au premier conduit de sorte que la partie d'oxydant soit fournie à la chambre de combustion et l'empilement de piles à combustible à oxyde solide étant agencé pour envoyer une partie de l'oxydant inutilisé provenant de la cathode de la au moins une pile à combustible à oxyde solide au second conduit ; ou
c) pour fournir une partie de l'oxydant au second conduit et l'empilement de piles à combustible à oxyde solide étant agencé pour envoyer une partie de l'oxydant inutilisé provenant de la cathode de la au moins une pile à combustible à oxyde solide au second conduit.

5. Système de pile à combustible à oxyde solide selon la revendication 1, un premier conduit raccordant la première sortie de l'échangeur de chaleur à la première entrée de l'échangeur de chaleur ; ledit compresseur étant agencé pour fournir une partie de l'oxydant au premier conduit de sorte que la partie d'oxydant soit envoyé à l'échangeur de chaleur et l'empilement de piles à combustible à oxyde solide étant agencé pour envoyer une partie de l'oxydant inutilisé provenant de la cathode de la au moins une pile à combustible à oxyde solide à la chambre de combustion et ladite chambre de combustion étant agencée pour envoyer les gaz d'échappement de la chambre de combustion au premier conduit.

6. Système de pile à combustible à oxyde solide selon la revendication 1, ledit compresseur étant agencé pour fournir une partie de l'oxydant à la chambre de combustion, l'empilement de piles à combustible à oxyde solide étant agencé pour envoyer une partie de l'oxydant inutilisé provenant de la cathode de la au moins une pile à combustible à oxyde solide à la première entrée de l'échangeur de chaleur et ledit échangeur de chaleur étant agencé pour envoyer une partie des gaz d'échappement de la chambre de combustion et une sous partie de la partie de l'oxydant inutilisé depuis la première sortie de l'échangeur de chaleur jusqu'à la chambre de combustion.

7. Système de pile à combustible à oxyde solide selon la revendication 1, ledit compresseur étant agencé pour fournir une partie de l'oxydant à la première entrée de l'échangeur de chaleur avec les gaz d'échappement de la chambre de combustion, l'empilement de piles à combustible à oxyde solide étant agencé pour envoyer une partie de l'oxydant inutilisé provenant de la cathode de la au moins une pile à combustible à oxyde solide avec les gaz d'échappement de la chambre de combustion et la partie de l'oxydant provenant du compresseur à la première entrée de l'échangeur de chaleur et ledit échangeur de chaleur étant agencé pour envoyer une partie des gaz d'échappement de la chambre de combustion, une sous-partie de la partie de l'oxydant inutilisé provenant de la cathode de la au moins une pile à combustible à oxyde solide et une sous-partie de la partie de l'oxydant provenant du compresseur, depuis la première sortie de l'échangeur de chaleur jusqu'à la chambre de combustion.

8. Système de pile à combustible à oxyde solide selon la revendication 1, ladite alimentation en oxydant destinée à fournir un oxydant à la chambre de combustion comprenant l'envoi d'une partie de l'oxydant inutilisé provenant de la cathode de la au moins une pile à combustible à oxyde solide à la chambre de combustion, ledit compresseur étant agencé pour fournir une partie de l'oxydant à la chambre de combustion et ledit échangeur de chaleur étant agencé pour envoyer une partie des gaz d'échappement de la chambre de combustion depuis la première sortie de l'échangeur de chaleur jusqu'à la chambre de combustion ; éventuellement ledit compresseur étant agencé pour fournir une partie de l'oxydant à un mélangeur, ladite première sortie de l'échangeur de chaleur étant agencée pour envoyer une partie des gaz d'échappement de la chambre de combustion au mélangeur et ledit mélangeur étant agencé pour envoyer la partie de l'oxydant et la partie des gaz d'échappement à la chambre de combustion.

9. Système de pile à combustible à oxyde solide selon la revendication 1, ladite alimentation en oxydant destinée à fournir un oxydant à la chambre de combustion comprenant l'envoi d'une partie de l'oxydant inutilisé provenant de la cathode de la au moins une pile à combustible à oxyde solide à la chambre de combustion, ledit compresseur étant agencé pour fournir une partie de l'oxydant à la première entrée de l'échangeur de chaleur de sorte que la partie d'oxydant s'écoule avec les gaz d'échappement de la chambre de combustion dans la première entrée de l'échangeur de chaleur et ledit échangeur de chaleur étant agencé pour envoyer une partie des gaz d'échappement de la chambre de combustion et une sous-partie de la partie d'oxydant depuis la première sortie de l'échangeur de chaleur jusqu'à la première entrée de l'échangeur de chaleur ; éventuellement ledit compresseur étant agencé pour fournir une partie de l'oxydant à un mélangeur, la première sortie de l'échangeur de chaleur étant agencé pour envoyer une partie des gaz d'échappement de la chambre de combustion et une sous-partie de l'oxydant au mélangeur et ledit mélangeur étant agencé pour envoyer la partie de l'oxydant provenant du compresseur, la partie des gaz d'échappement de la chambre de combustion et la sous-partie de la partie d'oxydant provenant depuis la première sortie de l'échangeur de chaleur jusqu'à la première entrée de l'échangeur de chaleur.

10. Système de pile à combustible à oxyde solide selon la revendication 1, ladite alimentation en oxydant destinée à fournir un oxydant à la chambre de combustion comprenant le compresseur agencé pour fournir une partie de l'oxydant à la chambre de combustion, l'envoi d'une partie de l'oxydant inutilisé provenant de la cathode de la au moins une pile à combustible à oxyde solide à la première entrée de l'échangeur de chaleur, et ledit échangeur de chaleur étant agencé pour envoyer une partie des gaz d'échappement de la chambre de combustion et une sous-partie de l'oxydant inutilisé provenant de la cathode de la au moins une pile à combustible à oxyde solide depuis la première sortie de l'échangeur de chaleur jusqu'à la chambre de combustion ; éventuellement ledit compresseur étant agencé pour fournir une partie de l'oxydant au mélangeur, ladite première sortie de l'échangeur de chaleur étant agencée pour envoyer une partie des gaz d'échappement de la chambre de combustion et une sous-partie de l'oxydant inutilisé provenant de la cathode de la au moins une pile à combustible à oxyde solide au mélangeur, ledit mélangeur étant agencé pour envoyer la partie des gaz d'échappement de la chambre de combustion et la sous-partie de la partie de l'oxydant inutilisé provenant de la cathode de la au moins une pile à combustible à oxyde solide depuis la première sortie de l'échangeur de chaleur jusqu'à la chambre de combustion.

11. Système de pile à combustible à oxyde solide selon la revendication 1, ladite alimentation en oxydant destinée à fournir un oxydant à la chambre de combustion comprenant le compresseur agencé pour fournir une partie de l'oxydant à la première entrée de l'échangeur de chaleur, ladite première sortie de l'échangeur de chaleur étant agencée pour envoyer une partie de l'oxydant provenant du compresseur à la chambre de combustion, ladite chambre de combustion étant agencée pour envoyer les gaz d'échappement de la chambre de combustion à la première entrée de l'échangeur de chaleur ; éventuellement ledit compresseur étant agencé pour fournir une partie de l'oxydant au mélangeur, ladite chambre de combustion étant agencée pour envoyer les gaz d'échappement de la chambre de combustion au mélangeur, le mélangeur étant agencé pour envoyer la partie de l'oxydant provenant du compresseur et les gaz d'échappement de la chambre de combustion provenant de la chambre de combustion à la première entrée de l'échangeur de chaleur, ladite première sortie de l'échangeur de chaleur étant agencée pour envoyer une partie des gaz d'échappement provenant de la chambre de combustion et une sous-partie de la partie de l'oxydant depuis la première sortie de l'échangeur de chaleur jusqu'à la chambre de combustion.

12. Système de pile à combustible à oxyde solide selon :
la revendication 1, comprenant des moyens pour mélanger la au moins une partie d'oxydant provenant du compresseur et les gaz d'échappement de la chambre de combustion provenant de la première sortie de l'échangeur de chaleur ; ou
la revendication 2, comprenant des moyens pour mélanger la au moins une partie d'oxydant provenant du compresseur et la partie des gaz d'échappement de la chambre de combustion et une sous-partie de la partie d'oxydant provenant de la première sortie de l'échangeur de chaleur jusqu'à l'échangeur de chaleur ; ou
la revendication 6, comprenant des moyens pour mélanger la au moins une partie d'oxydant provenant du compresseur et la partie des gaz d'échappement de la chambre de combustion et une sous-partie de la partie d'oxydant inutilisée provenant de la première sortie de l'échangeur de chaleur ; ou
revendication 7, comprenant des moyens pour mélanger les gaz d'échappement de la chambre de combustion et la partie d'oxydant provenant du compresseur ;
lesdits moyens pour mélanger comprenant éventuellement un ventilateur, une pompe, une soufflante, un éjecteur ou une turbomachine.

13. Système de pile à combustible à oxyde solide selon la revendication 3, ledit compresseur étant agencé pour fournir une partie de l'oxydant au second conduit et ledit empilement de piles à combustible à oxyde solide étant agencé pour envoyer une partie de l'oxydant inutilisé provenant de la cathode de la au moins une pile à combustible à oxyde solide à la chambre de combustion.

14. Système de pile à combustible à oxyde solide selon la revendication 11, ledit empilement de piles à combustible étant agencé pour envoyer une partie de l'oxydant inutilisé provenant de la cathode de la au moins une pile à combustible à oxyde solide à la chambre de combustion.

15. Procédé de fonctionnement d'un système de pile à combustible à oxyde solide, ledit système de pile à combustible à oxyde solide comprenant un empilement de piles à combustible à oxyde solide, un compresseur et une turbine, ledit empilement de piles à combustible à oxyde solide comprenant au moins une pile à combustible à oxyde solide, chaque pile à combustible à oxyde solide comprenant un électrolyte, une anode et une cathode, le procédé comprenant l'envoi d'au moins une partie de l'oxydant provenant du compresseur à la cathode de la au moins une pile à combustible à oxyde solide, l'envoi de combustible à l'anode de la au moins une pile à combustible à oxyde solide, le renvoi d'une partie de l'oxydant inutilisé provenant de la cathode de la au moins une pile à combustible à oxyde solide à la cathode de la au moins une pile à combustible à oxyde solide, l'envoi d'une partie du combustible inutilisé provenant de l'anode de la au moins une pile à combustible à oxyde solide à la chambre de combustion, l'envoi d'oxydant à la chambre de combustion, l'envoi des gaz d'échappement de la chambre de combustion à une première entrée d'un échangeur de chaleur, l'envoi d'au moins une partie des gaz d'échappement de la chambre de combustion provenant d'une première sortie de l'échangeur de chaleur à la turbine, l'envoi de la au moins une partie de l'oxydant provenant du compresseur et de l'oxydant inutilisé provenant de la cathode de la au moins une pile à combustible à oxyde solide à une deuxième entrée de l'échangeur de chaleur pour préchauffer l'oxydant envoyé à la cathode de la au moins une pile à combustible à oxyde solide, l'envoi de la au moins une partie de l'oxydant provenant du compresseur et de l'oxydant inutilisé provenant de la cathode de la au moins une pile à combustible à oxyde solide depuis une deuxième sortie de l'échangeur de chaleur jusqu'à la cathode de la au moins une pile à combustible à oxyde solide ;
ledit envoi d'oxydant à la chambre de combustion comprenant l'envoi d'une partie de l'oxydant inutilisé provenant de la cathode de la au moins une pile à combustible à oxyde solide à la chambre de combustion ; et
ledit compresseur fournissant une partie de l'oxydant à la chambre de combustion et ledit échangeur de chaleur envoyant une partie des gaz d'échappement de la chambre de combustion depuis la première sortie de l'échangeur de chaleur jusqu'à la chambre de combustion.
